# EUROPÄISCHE PATENTSCHRIFT

(11) **EP 2 342 681 B1**
(45) Veröffentlichungstag und Bekanntmachung des Hinweises auf die Patenterteilung: **27.03.2013**
(21) Anmeldenummer: 09755831.6
(22) Anmeldetag: 17.09.2009
(51) Int. Cl.: G06K 19/073

(54) **VERFAHREN UND KOMMUNIKATIONSSYSTEM ZUM BERECHTIGUNGSABHÄNGIGEN STEUERN EINER KONTAKTLOSEN SCHNITTSTELLENEINRICHTUNG**
METHOD AND COMMUNICATION SYSTEM FOR THE AUTHORIZATION-DEPENDENT CONTROL OF A CONTACTLESS INTERFACE DEVICE
PROCÉDÉ ET SYSTÈME DE COMMUNICATION POUR LA COMMANDE EN FONCTION DES DROITS D'UNE INTERFACE SANS CONTACT

(30) Priorität: 30.09.2008 DE 102008049736; 27.10.2008 DE 102008053292
(43) Veröffentlichungstag der Anmeldung: 13.07.2011
(73) Patentinhaber: Deutsche Telekom AG, 53113 Bonn (DE)
(72) Erfinder: BREUER, Jörg, 57223 Kreuztal (DE)
(74) Vertreter: Blumbach Zinngrebe
(86) Internationale Anmeldenummer: PCT/DE2009/001308
(87) Internationale Veröffentlichungsnummer: WO 2010/037361

(56) Entgegenhaltungen:
- WO-A2-2007/044144
- US-A1- 2006 113 381
- US-A1- 2008 029 608

## Beschreibung

Die Erfindung betrifft ein Verfahren sowie ein Kommunikationssystem zum berechtigungsabhängigen Steuern einer kontaktlosen Schnittstelleneinrichtung einer Kommunikationseinrichtung, wie zum Beispiel einer Chipkarte oder einem mobilen Kommunikationssystem.

Insbesondere seit Einführung des elektronischen Reisepasses auf der Basis einer Chipkarte ist die Diskussion um den Schutz von Personendaten auf elektronischen Ausweisdokumenten entfacht. Sicherheitsbedenken bestehen insbesondere bei Chipkarten mit kontaktlosen Schnittstellen, wie zum Beispiel RFID-Chips (RFID von Radio Frequency Identification). Hierbei besteht die Gefahr, dass Nichtberechtigte permanent die Möglichkeit haben, Daten über die kontaktlose Schnittstelle auszulesen. Die Sorge, dass Daten aus elektronischen Einrichtungen mit kontaktlosen Schnittstellen von Unberechtigten ausgelesen werden, besteht nicht nur bei Bürgerkarten, National-ID-Karten, den zukünftigen Personalausweisen, sondern auch bei Kommunikationssystemen, die beispielsweise in Fahrzeugen implementiert sind. Die Merkmale gemäß den Oberbegriffen der unabhängigen Ansprüche sind aus US 2008/0029608 A1 und US 2006/0113381 A1 bekannt.

Der vorliegenden Erfindung liegt die Aufgabe zugrunde, ein Verfahren und ein Kommunikationssystem zu schaffen, welche die Datensicherheit beim Gebrauch von Kommunikationseinrichtungen mit kontaktlosen Schnittstellen erhöhen.

Ein Kerngedanke der Erfindung ist darin zu sehen, eine Maßnahme zu ergreifen, mit der ein Nutzer in einfacher aber zuverlässiger Weise den Zugang zu einer Kommunikationseinrichtung über eine kontaktlose Schnittstelleneinrichtung steuern kann.

Dies kann erreicht werden, in dem eine Kommunikationseinrichtung, insbesondere eine fernauslesbare Chipkarte am Aussenden von Daten über eine kontaktlose Schnittstelleneinrichtung gehindert wird, wenn ein berechtigter Nutzer willentlich durch eine aktive Handlung die kontaktlose Schnittstelleneinrichtung deaktiviert hat. In der Kommunikationseinrichtung ist deshalb eine Art "hemmende" Funktionalität implementiert, die ein ungewolltes automatisches Auslesen von Daten verhindert. Andererseits kann die Kommunikationseinrichtung Daten nur dann über die kontaktlose Schnittstelleneinrichtung aussenden, wenn zuvor der berechtigte Nutzer willentlich durch eine aktive Handlung die kontaktlose Schnittstelleneinrichtung aktiviert.

Das oben genannte technische Problem wird durch die Verfahrensschritte des Anspruchs 1 gelöst.

Danach wird ein Verfahren zum berechtigungsabhängigen Steuern einer kontaktlosen Schnittstelleneinrichtung einer Kommunikationseinrichtung bereitgestellt. Zunächst authentifiziert sich ein Nutzer gegenüber der Kommunikationseinrichtung, beispielsweise unter Anwendung eines herkömmlichen Authentifizierungsverfahrens. Zum Nachweis einer entsprechenden Berechtigung kann der Nutzer aufgefordert werden, ein Passwort an der Kommunikationseinrichtung einzugeben. Nach erfolgreicher Authentifizierung wird die kontaktlose Schnittstelleneinrichtung deaktiviert, um eine Datenübertragung über die kontaktlose Schnittstelleneinrichtung zu unterbinden. Mit dem Verfahren wird eine berechtigungsabhängige Steuerung einer Schnittstelle (Interface) bereitgestellt, bei dem die Nutzung der Schnittstelle nur dann ermöglicht wird, wenn die Schnittstelle von dem berechtigten Benutzer durch eine gezielte, aktive Handlung zur Nutzung freigegeben wird.

Bei der Kommunikationseinrichtung kann es sich um ein Identifikationsmedium, wie zum Beispiel eine Chipkarte mit einer RFID-Funktionalität, handeln.

Gemäß der Erfindung wird die kontaktlose Schnittstelleneinrichtung logisch deaktiviert indem der Deaktivierungsschritt eine Filterfunktion startet. Die aktivierte Filterfunktion sorgt dafür, dass lediglich ein Befehl zum Aktivieren der kontaktlosen Schnittstelleneinrichtung akzeptiert wird. Alle anderen Befehle, wie zum Beispiel der Befehl zum Auslesen von Daten aus der Kommunikationseinrichtung, werden abgelehnt.

Angemerkt sei an dieser Stelle, dass mit dem Ausdruck "Deaktivieren der kontaktlosen Schnittstelleneinrichtung" jede Maßnahme verstanden werden kann, die verhindert, dass Daten von unberechtigten Personen über die kontaktlose Schnittstelleneinrichtung, die auch eine Antenne umfassen kann, aus der Kommunikationseinrichtung ausgelesen werden können.

Gemäß einer weiteren Ausführungsform weist die kontaktlose Schnittstelleneinrichtung eine Antenne auf, die während des Deaktivierungsschritts deaktiviert wird. Beispielsweise kann durch ein entsprechendes Deaktivierungssignal eine Schalteinrichtung, die die Antenne beispielsweise von der Kommunikationseinrichtung oder von einer Energieversorgungsquelle trennt, betätigt werden, so dass über die Antenne weder Daten empfangen noch gesendet werden können. In diesem Fall spricht man auch von einer gesteuerten physikalischen Trennung der kontaktlosen Schnittstelleneinrichtung. Die Verbindung zur Antenne kann aber auch per Software getrennt oder geschlossen werden.

An dieser Stelle sei darauf hingewiesen, dass das entsprechende Deaktivierungssignal zum Aufrufen der Filterfunktion und/oder zum Deaktivieren der Antenne von der Kommunikationseinrichtung selbst oder von einer externen Einrichtung bereitgestellt werden kann.

Um die deaktivierte kontaktlose Schnittstelleneinrichtung wieder aktivieren zu können, authentifiziert sich der Nutzer erneut gegenüber der Kommunikationseinrichtung. Nunmehr wird ein Aktivierungssignal bereitgestellt. Unter Ansprechen auf das Aktivierungssignal wird die Filterfunktion deaktiviert, d. h. abgeschaltet, und/oder die Antenne aktiviert.

Nach einer Deaktivierung der Filterfunktion können Befehle zum Auslesen von Daten aus der Kommunikationseinrichtung wieder verarbeitet werden. Zur Aktivierung der Antenne kann beispielsweise über die erwähnte Schalteinrichtung die Antenne wieder mit der Kommunikationseinrichtung oder der Energieversorgungsquelle verbunden werden, so dass Daten empfangen und übertragen werden können.

Das Aktivierungssignal kann sowohl von der Kommunikationseinrichtung selbst als auch von einer externen Einrichtung erzeugt werden. Ist die Antenne deaktiviert, wird das extern erzeugte Aktivierungssignal über eine kontaktbehaftete Schnittstelleneinrichtung zur Kommunikationseinrichtung übertragen. In diesem Fall können auch die für die Authentifizierung notwendigen Signale über die kontaktbehaftete Schnittstelleneinrichtung übertragen werden.

Bei der externen Einrichtung kann es sich um ein Erfassungs-/Lesegerät handeln, das die Funktion des Aktivierens und Deaktivierens steuert. Über dieses Erfassungs-/Lesegeräts kann der Nutzer die Schnittstelle aktivieren oder deaktivieren, wobei er sich dafür vorteilhafter Weise beim dem Gerät entsprechend identifizieren muss. Die externe Einrichtung kann auch ein Mittel sein, das der Nutzer bei sich führt. Beispielsweise ist denkbar, einen Mikroschalter mit einem unmittelbar auf der Kommunikationseinrichtung aufgesetzten Magneten zu schalten.

Für den Fall, dass das Auslesen von Daten aus der Kommunikationseinrichtung lediglich über die Filterfunktion gesperrt wird, kann das extern bereitgestellte Aktivierungssignal auch über die kontaktlose Schnittstelleneinrichtung der Kommunikationseinrichtung empfangen werden, da die Antenne nach wie vor aktiv ist.

Der Authentifizierungsschritt kann auf herkömmlichen Authentifizierungsmechanismen beruhen, welche zum Beispiel das Auswerten einen Passwortes, das Auswerten von Sprachsignalen und/oder das Auswerten biometrischer Daten umfasst.

Das oben genannte technische Problem wird ebenfalls durch die Merkmale des Anspruchs 7 gelöst.

Danach wird ein Kommunikationssystem zum berechtigungsabhängigen Steuern einer kontaktlosen Schnittstelleneinrichtung einer Kommunikationseinrichtung geschaffen. Die Kommunikationseinrichtung weist eine kontaktlose Schnittstelleneinrichtung, eine Einrichtung zum Authentifizieren eines Nutzers sowie eine Steuereinrichtung auf. Die Steuereinrichtung ist derart ausgebildet, dass sie nach erfolgreicher Authentifizierung die Deaktivierung der kontaktlosen Schnittstelleneinrichtung steuert, um eine Datenübertragung über die kontaktlose Datenschnittstelleneinrichtung zu unterbinden.

Zur Deaktivierung der kontaktlosen Schnittstelleneinrichtung kann gemäß einem Ausführungsbeispiel die Steuereinrichtung ein Programm aufrufen, welches beispielsweise eine Filterfunktion ausführt, die lediglich einen Befehl zum Aktivieren der kontaktlosen Schnittstelleneinrichtung akzeptiert. Alle übrigen Befehle, insbesondere Befehl zum Auslesen von Daten aus der Kommunikationseinrichtung werden abgelehnt.

Weist die kontaktlose Schnittstelleneinrichtung eine Antenne auf, kann die Deaktivierung auch dadurch vorgenommen werden, dass die Steuereinrichtung die Deaktivierung der Antenne steuert.

Die Kommunikationseinrichtung kann eine kontaktbehaftete Schnittstelleneinrichtung zum Empfang von Authentifizierungssignalen und/oder eines Aktivierungsbefehls aufweisen. Die Steuereinrichtung kann in diesem Fall derart ausgebildet sein, dass sie unter Ansprechen auf einen über die kontaktbehaftete Schnittstelleneinrichtung empfangenen Aktivierungsbefehl ein Steuersignal zum Aktivieren der Antenne erzeugt. Zudem kann die Steuereinrichtung derart ausgebildet sein, dass sie unter Ansprechen auf den über die kontaktbehaftete Schnittstelleneinrichtung empfangenen Aktivierungsbefehl ein Steuersignal zum Abschalten der Filterfunktion liefert.

Vorzugsweise handelt es sich bei der Kommunikationseinrichtung um einen tragbaren Datenträger, wie zum Beispiel eine Chipkarte.

Die Erfindung wird nachfolgend anhand eines Ausführungsbeispiels in Verbindung mit einer Figur näher erläutert.

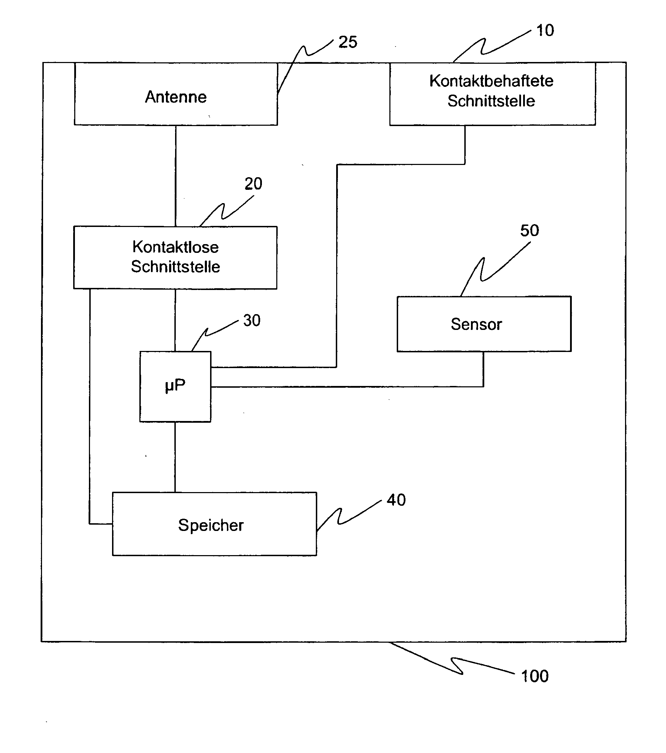

Die Figur zeigt eine Kommunikationseinrichtung 100, welche beispielsweise ein elektronischer Ausweis in Form einer Dual-Interface Chipkarte ist. Die Kommunikationseinrichtung 100 weist einen Speicher 40 auf, in welchem persönliche Daten hinterlegt sein können. Zur drahtlosen Kommunikation weist die Kommunikationseinrichtung 100 eine kontaktlose Schnittstelleneinrichtung auf, die einen als kontaktlose Schnittstelle 20 bezeichneten Funktionsblock und eine Antenne 25 aufweist. Die kontaktlose Schnittstelle 20 kann beispielsweise das Kommunikationsprotokoll zur drahtlosen Datenkommunikation und eine Filterfunktion, die später erläutert wird, enthalten.

Optional kann die Kommunikationseinrichtung 100 eine kontaktbehaftete Schnittstelle 10 zur kontaktbehafteten Datenübertragung aufweisen. Damit sich ein Benutzer gegenüber der Kommunikationseinrichtung 100 authentifizieren kann, kann die Kommunikationseinrichtung 100 selbst Einrichtungen zur Eingabe eines Passwortes, ein Mikrofon zur Eingabe von Sprachsignalen und/oder einen biometrischen Sensor 50 aufweisen, um Fingerabdrücke identifizieren zu können. Die zur Authentifizierung erforderlichen Signale können aber auch von extern, zum Beispiel mittels eines Terminals (nicht dargestellt) zur Kommunikationseinrichtung 100 übertragen werden. Das Terminal kann als Erfassungs-/Lesegerät ausgebildet sein.

Die Steuerung der Kommunikationseinrichtung 100 erfolgt über einen programmierbaren Mikroprozessor 30, der mit den beschriebenen Komponenten verbunden ist. Für den Fall, dass Sprachsignale über ein Mikrophon an der Kommunikationseinrichtung eingegeben werden, weist die Kommunikationseinrichtung 100 einen Sprachanalysator auf, welcher die eingegebenen Sprachsignale mit hinterlegten Sprachmustern vergleicht. Denkbar ist aber auch, dass die Authentifizierung an einem Terminal eingeleitet wird, in den die Kommunikationseinrichtung 100 eingeführt werden kann. Die zur Authentifizierung erforderlichen Daten können entweder über die kontaktbehaftete Schnittstelle 10 oder die kontaktlose Schnittstelle 20 zur Kommunikationseinrichtung 100 übertragen werden.

Die Funktionsweise der Kommunikationseinrichtung 100 wird beispielsweise anhand eines elektronischen Ausweises näher erläutert.

Der Benutzer des elektronischen Ausweises 100 möchte verhindern, dass nichtberechtigte Personen Daten über die kontaktlose Schnittstelle 20 und die Antenne 25 aus dem Speicher 40 auslesen können. Hierzu kann der Nutzer ein nicht dargestelltes Terminal benutzen, in welches der elektronische Ausweis 100 eingeführt werden kann. Das Terminal ist derart ausgebildete, dass ein Benutzer den Befehl "Deaktivierung der kontaktlosen Schnittstelleneinrichtung" eingeben kann. Nach Eingabe des Befehls wird der Nutzer vom Terminal aufgefordert, einen Nachweis seiner Berechtigung zu erbringen. Hierzu kann der Nutzer beispielsweise sein Passwort an der Tastatur des Terminals eingeben. Das Passwort kann über die kontaktlose Schnittstelleneinrichtung 20, 25 oder über die kontaktbehaftete Schnittstelle 10 zur Kommunikationseinrichtung 100 übertragen werden. Der Mikroprozessor 30 vergleicht das eingegebene Passwort mit einem hinterlegten Passwort. Gemäß einer beispielhaften Ausführungsform erzeugt der Mikroprozessor 30 bei erfolgreichem Nachweis ein Deaktivierungssignal, welches die kontaktlose Schnittstelle 20 und/oder die Antenne 25 deaktiviert. Der Mikroprozessor 30 kann alternativ auch von einem über das Terminal eingegebenen Deaktivierungsbefehl veranlasst werden, ein Deaktivierungssignal zu erzeugen.

In der Kommunikationseinrichtung 100 kann zum Beispiel ein Programm wie ein eigenes Betriebssystem gespeichert sein. In diesem Fall kann die kontaktlose Schnittstelle 20 auch dadurch deaktiviert werden, dass das vom Mikroprozessor 30 gelieferte Deaktivierungssignal eine Filterfunktion aufruft. Die aktivierte Filterfunktion hat die Aufgabe, alle Befehle, mit Ausnahme des Befehls "Aktivierung der kontaktlosen Schnittstelle", abzulehnen. Auf diese Weise wird sichergestellt, dass zum Beispiel ein an der kontaktlosen Schnittstelle 20 empfangener Befehl "Auslesen von Daten" nicht akzeptiert wird. Angemerkt sei, dass die Filterfunktion Bestandteil der kontaktlosen Schnittstelle 20 sein kann.

Um die Antenne 25 zu deaktivieren, kann das von dem Mikroprozessor 30 gelieferte Deaktivierungssignal ein nicht dargestelltes Schaltelement, beispielsweise ein Halbleiterschalter, ansteuern. Das Schaltelement kann zwischen der Antenne 25 und der kontaktlosen Schnittstelle 20 angeordnet sein. Denkbar ist auch, dass die Antenne 25 über das Schaltelement mit einer Energieversorgungseinrichtung (nicht dargestellt) verbunden ist. Wird das Schaltelement geöffnet, wird entweder die kontaktlose Schnittstelle 20 von der Antenne 25 oder die Antenne 25 von der Energieversorgungseinrichtung getrennt. In beiden Fällen können keine Daten mehr über die kontaktlose Schnittstelle 20 übertragen werden.

Der Nutzer entscheidet somit durch eine gezielte Handlung selbst, ob und wann er einen Zugriff auf seinen elektronischen Ausweis 100 zulässt.

Nunmehr sei der Fall angenommen, dass der Nutzer den Zugriff auf die Kommunikationseinrichtung 100 über die kontaktlose Schnittstelleneinrichtung erlauben möchte.

Hierzu kann der Nutzer erneut ein Terminal aufsuchen, in das er die Kommunikationseinrichtung 100 einführt. Angenommen sei, dass die Antenne 25 der kontaktlosen Schnittstelleneinrichtung deaktiviert ist, so dass das Terminal nur über die kontaktbehaftete Schnittstelle 10 mit der Kommunikationseinrichtung 100 kommunizieren kann.

Gemäß einer beispielhaften Ausführungsform läuft nunmehr das folgende Prozedere ab:
Zunächst ruft der Nutzer die Aktion "Aktivierung der kontaktlosen Schnittstelle" auf. Daraufhin wird der Nutzer aufgefordert, sich zu authentifizieren. Zur Authentifizierung kann der Nutzer beispielsweise ein Passwort am Terminal eingeben oder mittels eines biometrischen Sensors einen Fingerabdruck erstellen lassen. Die zur Authentifizierung erforderlichen Daten werden anschließend über die kontaktbehaftete Schnittstelle 10 zum Mikroprozessor 30 übertragen. Der Mikroprozessor 30 führt unter Ansprechen auf die empfangenen Authentifizierungsdaten eine Authentifizierung durch. Nach erfolgreicher Authentifizierung gibt der Nutzer den Befehl "Aktivieren der kontaktlosen Schnittstelle" ein. Unter Ansprechen auf den Aktivierungsbefehl erzeugt der Mikroprozessor 30 ein Steuersignal, welches das Schaltelement schließt, so dass die Antenne 25 wieder mit Energie versorgt wird. Ab diesem Moment ist die kontaktlose Schnittstelleneinrichtung aktiviert.

Wurde zusätzlich oder alternativ die Filterfunktion eingeschaltet, erzeugt der Mikroprozessor 30 unter Ansprechen auf den Aktivierungsbefehl ein Steuersignal, welches die Filterfunktion abschaltet und somit die kontaktlose Schnittstelleneinrichtung freigibt.

Angemerkt sei, dass der Mikroprozessor 30 auch unmittelbar, d. h. ohne Eingabe eines separaten Aktivierungsbefehls, die Aktivierung der Antenne 25 und/oder das Abschalten der Filterfunktion veranlassen kann.

Ist die kontaktlose Schnittstelleneinrichtung nicht mittels der Antenne 25, sondern lediglich logisch über die Filterfunktion deaktiviert worden, kann der Befehl zur Aktivierung auch über die kontaktlose Schnittstelleneinrichtung empfangen werden. Denn der Befehl "Aktivierung der kontaktlosen Schnittstelleneinrichtung" wird von der Filterfunktion akzeptiert.

Auf diese Weise wird sichergestellt, dass die Kommunikationseinrichtung 100 nur dann auf einen Lesebefehl antworten kann, wenn die kontaktlose Schnittstelleneinrichtung zuvor von dem berechtigten Nutzer willentlich durch eine aktive Handlung aktiviert worden ist.

Die in der Figur gezeigte Kommunikationseinrichtung 100 könnte auch im Automobilbereich zum Einsatz kommen. So sind in den heute in Entwicklung befindlichen CartoCar-Kommunikationssystemen, bei denen das Fahrzeug mit verschiedenen elektronischen Einrichtungen kommuniziert, kontaktlose Schnittstellen implementiert. Auch hier möchte der Nutzer in Abhängigkeit von verschiedenen Situationen nur eine oder mehrere bestimmte Schnittstellen freigeben. Mit Hilfe einer berechtigungsgesteuerten kontaktlosen Schnittstelle, wie sie in der Kommunikationseinrichtung 100 verwendet wird, könnte der Nutzer beispielsweise sicherstellen, dass innere und externe Kommunikationssysteme nur dann mit dem Fahrzeug kommunizieren können, wenn der Fahrer dies willentlich durch eine aktive Handlung zugelassen hat. Auf diese Weise kann der Nutzer verhindern, dass beispielsweise während der Fahrt Daten ausgelesen und ausgewertet werden.

Angemerkt sei, dass durch ein entsprechendes Berechtigungskonzept verschiedenen Nutzern die Berechtigung zur Nutzung der kontaktlosen Schnittstelle einer Kommunikationseinrichtung eingeräumt werden kann. Dank des beschriebenen Verfahrens und des beschriebenen Kommunikationssystems kann die kontaktlose Schnittstelle der Kommunikationseinrichtung 100 nur dann genutzt werden, wenn eine entsprechende Berechtigung zur Aktivierung dieser Schnittstelle nachgewiesen wird. Der Nutzer muss durch eine willentlich gesteuerte und aktive Handlung, nämlich durch das Aktivieren der kontaktlosen Schnittstelle, einer Nutzung der Schnittstellen zustimmen. Das heißt, dass bei einer berechtigungsgesteuerten Schnittstelle die Kommunikationseinrichtung 100 nur dann antwortet, wenn die Schnittstelle von einem berechtigten Nutzer vorher gezielt durch eine aktive Handlung aktiviert wurde. Durch diese Maßnahme wird die Sicherheit der Datenauslese wesentlich verbessert. Zudem bleibt es Unberechtigten verwehrt, Daten aus der Kommunikationseinrichtung 100 auszulesen.

Demzufolge ist in der Kommunikationseinrichtung eine hemmende Funktionalität implementiert, die vom Nutzer aktiv abrufbar ist, wobei eine aktivierte, also eingeschaltete Hemmung die Möglichkeit der Fernauslese und somit die Antwortfunktion der Kommunikationseinrichtung blockiert.

## Patentansprüche

1. Verfahren zum berechtigungsabhängigen Steuern einer kontaktlosen Schnittstelleneinrichtung (20, 25) einer Kommunikationseinrichtung (100) mit folgenden Verfahrensschritten:
Authentifizieren eines Nutzers gegenüber der Kommunikationseinrichtung (100); und
nach erfolgreicher Authentifizierung Deaktivieren der kontaktlosen Schnittstelleneinrichtung (100), um eine Datenübertragung über die kontaktlose Schnittstelleneinrichtung zu unterbinden
**dadurch gekennzeichnet, dass**
der Schritt des Deaktivierens eine Filterfunktion startet, die lediglich einen Befehl zum Aktivieren der kontaktlosen Schnittstelleneinrichtung (20) akzeptiert.

2. Verfahren nach Anspruch 1,
**dadurch gekennzeichnet, dass**
die kontaktlose Schnittstelleneinrichtung eine Antenne (25) umfasst und dass
der Schritt des Deaktivierens auch die Antenne (25) deaktiviert.

3. Verfahren nach Anspruch 2,
**gekennzeichnet durch** folgende Schritte:
erneutes Authentifizieren des Nutzers gegenüber der Kommunikationseinrichtung (100);
Bereitstellen eines Aktivierungssignals; und
Deaktivieren der Filterfunktion und/oder Aktivieren der Antenne (25) unter Ansprechen auf das Aktivierungssignal.

4. Verfahren nach Anspruch 3,
**dadurch gekennzeichnet, dass**
Authentifizierungssignale zum Authentifizieren des Nutzers und/oder das Aktivierungssignal über eine kontaktbehaftete Schnittstelleneinrichtung zur Kommunikationseinrichtung übertragen werden.

5. Verfahren nach einem der vorstehenden Ansprüche,
**dadurch gekennzeichnet, dass**
der Authentifizierungsschritt das Auswerten eines Passwortes, von Sprachsignalen und/oder biometrischer Daten umfasst.

6. Kommunikationssystem zum berechtigungsabhängigen Steuern einer kontaktlosen Schnittstelleneinrichtung einer Kommunikationseinrichtung, die folgende Merkmale aufweist:
eine kontaktlose Schnittstelleneinrichtung (20, 25), eine Einrichtung (50) zum Authentifizieren eines Nutzers; und
eine Steuereinrichtung (30), die nach erfolgreicher Authentifizierung die Deaktivierung der kontaktlosen Schnittstelleneinrichtung (20, 25) steuert, um eine Datenübertragung über die kontaktlose Schnittstelleneinrichtung zu unterbinden,
**dadurch gekennzeichnet, dass**
die Steuereinrichtung (30) zum Deaktivieren der kontaktlosen Schnittstelleneinrichtung (20, 25) eine Filterfunktion aufruft, die lediglich einen Befehl zum Aktivieren der kontaktlosen Schnittstelleneinrichtung (20, 25) akzeptiert.

7. Kommunikationssystem nach Anspruch 6,
**dadurch gekennzeichnet, dass**
die kontaktlose Schnittstelleneinrichtung eine Antenne (25) umfasst,
wobei die Steuereinrichtung (30) zum Deaktivieren der kontaktlosen Schnittstelleneinrichtung auch die Antenne (25) deaktiviert.

8. Kommunikationssystem nach Anspruch 6 oder 7,
**dadurch gekennzeichnet, dass**
die Kommunikationseinrichtung (100) eine kontaktbehaftete Schnittstelleneinrichtung (10) zum Empfang von Authentifizierungssignalen und/oder eines Aktivierungsbefehls aufweist, und dass
die Steuereinrichtung (30) unter Ansprechen auf einen über die kontaktbehaftete Schnittstelleneinrichtung (20, 25) empfangenen Aktivierungsbefehl entweder die Deaktivierung der Filterfunktion oder die Aktivierung die Antenne (25) steuert.

9. Kommunikationssystem nach einem der Ansprüche 6 bis 8,
**dadurch gekennzeichnet, dass**
die Kommunikationseinrichtung (100) ein tragbarer Datenträger, insbesondere eine Chipkarte ist.

## Claims

1. A method for the authorisation-dependent control of a contactless interface device (20, 25) of a communication device (100), the method comprising the following steps:
authenticating a user to the communication device (100); and,
after successful authentication, deactivating the contactless interface device (100) to prevent data transmission via the contactless interface device,
**characterised in that** the step of deactivation initiates a filtering function that accepts only a command to activate the contactless interface device (20).

2. The method according to claim 1, **characterised in that** the contactless interface device comprises an antenna (25) and that the step of deactivation also deactivates the antenna (25).

3. The method according to claim 2, **characterised by** the following steps:
authenticating the user to the communication device (100) again;
providing an activation signal; and
deactivating the filter function and/or activating the antenna (25) in response to the activation signal.

4. The method according to claim 3, **characterised in that** authentication signals for authenticating the user and/or the activation signal is/are transmitted to the communication device via a contact-based interface device.

5. The method according to any one of the preceding claims, **characterised in that** the step of authenticating comprises the evaluation of a password, of speech signals and/or of biometric data.

6. A communication system for the authorisation-dependent control of a contactless interface device of a communication device, the communication system having the following features:
a contactless interface device (20, 25),
a device (50) for authenticating a user; and
a control device (30) that controls the deactivation of the contactless interface device (20, 25) after successful authentication, in order to suppress data transmission via the contactless interface device,
**characterised in that** the control device (30) calls a filtering function in order to deactivate the contactless interface device (20, 25), the filtering function accepting only a command to deactivate the contactless interface device (20, 25).

7. The communication system according to claim 6, **characterised in that** the contactless interface device comprises an antenna (25), wherein the control device (30) for the deactivation of the contactless interface device deactivates also the antenna (25).

8. The communication system according to claim 6 or 7, **characterised in that** the communication device (100) has a contact-based interface device (10) for receiving authentication signals and/or an activation command, and that the control device (30), in response to an activation command received via the contact-based interface device (20, 25); controls either the deactivation of the filtering function or the activation of the antenna (25).

9. The communication system according to any one of claims 6 to 8, **characterised in that** the communication device (100) is a portable data carrier, in particular a chip card.

## Revendications

1. Procédé de commande, en fonction de l'autorisation, d'un dispositif d'interface sans contact (20, 25) d'un dispositif de communication (100) comprenant les étapes de procédé suivantes :
authentification d'un utilisateur vis-à-vis du dispositif de communication (100) ; et après authentification réussie, désactivation du dispositif d'interface sans contact (100), afin d'empêcher une transmission de données via le dispositif d'interface sans contact,
**caractérisé en ce que** l'étape de désactivation démarre une fonction de filtrage n'acceptant qu'une commande d'activation du dispositif d'interface sans contact (20).

2. Procédé selon la revendication 1, **caractérisé en ce que** le dispositif d'interface sans contact comprend une antenne (25) et **en ce que** l'étape de désactivation désactive également l'antenne (25).

3. Procédé selon la revendication 2, **caractérisé par** les étapes suivantes:
nouvelle authentification de l'utilisateur vis-à-vis du dispositif de communication (100) ; fourniture d'un signal d'activation; et
désactivation de la fonction de filtrage et/ou activation de l'antenne (25) en réponse au signal d'activation.

4. Procédé selon la revendication 3, **caractérisé en ce que** des signaux d'authentification de l'utilisateur et/ou le signal d'activation sont transmis au dispositif de communication via un dispositif d'interface à contact.

5. Procédé selon l'une des revendications précédentes, **caractérisé en ce que** l'étape d'authentification comprend l'analyse d'un mot de passe, de signaux vocaux et/ou de données biométriques.

6. Système de communication pour la commande, en fonction de l'autorisation, d'un dispositif d'interface sans contact d'un dispositif de communication présentant les caractéristiques suivantes :
un dispositif d'interface sans contact (20, 25),
un dispositif (50) d'authentification d'un utilisateur ; et
un dispositif de commande (30) qui, après authentification réussie, commande la désactivation du dispositif d'interface sans contact (20, 25), afin d'empêcher une transmission de données via le dispositif d'interface sans contact,
**caractérisé en ce que**
pour désactiver le dispositif d'interface sans contact (20, 25), le dispositif de commande (30) active une fonction de filtrage n'acceptant qu'une commande d'activation du dispositif d'interface sans contact (20, 25).

7. Système de communication selon la revendication 6, **caractérisé en ce que** le dispositif d'interface sans contact comprend une antenne (25),
le dispositif de commande (30) pour la désactivation du dispositif d'interface sans contact désactivant également l'antenne (25).

8. Système de communication selon l'une des revendications 6 ou 7, **caractérisé en ce que** le dispositif de communication (100) comporte un dispositif d'interface à contact (10) pour la réception de signaux d'authentification et/ou d'une commande d'activation, et **en ce que**
le dispositif de commande (30) commande soit la désactivation de la fonction de filtrage soit l'activation de l'antenne (25), en réponse à une commande d'activation reçue via le dispositif d'interface à contact (20, 25).

9. Système de communication selon l'une des revendications 6 à 8, **caractérisé en ce que** le dispositif de communication (100) est un support de données mobile, notamment une carte à puce.
